Europäisches Patentamt

European Patent Office

Office européen des brevets

(11) Veröffentlichungsnummer : **0 108 244 B2**

(12) **NEUE EUROPÄISCHE PATENTSCHRIFT**

(45) Veröffentlichungstag der neuen Patentschrift:
03.07.91 Patentblatt 91/27

(51) Int. Cl.⁵ : **H02J 13/00**

(21) Anmeldenummer : 83109798.5

(22) Anmeldetag : 30.09.83

(54) **Rundsteuerempfänger.**

(30) Priorität : 15.10.82 DE 3238249

(43) Veröffentlichungstag der Anmeldung :
16.05.84 Patentblatt 84/20

(45) Bekanntmachung des Hinweises auf die
Patenterteilung :
27.11.85 Patentblatt 85/48

(45) Bekanntmachung des Hinweises auf die
Entscheidung über den Einspruch :
03.07.91 Patentblatt 91/27

(84) Benannte Vertragsstaaten :
AT BE CH DE LI NL

(56) Entgegenhaltungen :
DE-A- 2 708 074
DE-A- 2 743 212

(56) Entgegenhaltungen :
DE-A- 2 831 771
DE-B- 2 116 781
FR-A- 2 121 318
FR-A- 2 381 407
Lehrbuch "Elektrizitätszähler", Springer-Verlag, Berlin, Göttingen, Heidelberg, 1954, S.
315-321

(73) Patentinhaber : **Asea Brown Boveri**
**Aktiengesellschaft**
**Kallstadter Strasse 1**
**W-6800 Mannheim-Käfertal (DE)**

(72) Erfinder : **Dobberstein, Joachim, Ing.grad.**
**Berliner Strasse 18**
**W-6805 Heddesheim (DE)**

(74) Vertreter : **Rupprecht, Klaus, Dipl.-Ing. et al**
**c/o Asea Brown Boveri Aktiengesellschaft**
**Zentralbereich Patente Postfach 100351**
**W-6800 Mannheim 1 (DE)**

EP 0 108 244 B2

**Beschreibung**

Die Erfindung betrifft einen Rundsteuerempfänger nach dem Oberbegriff des Anspruchs 1.

Rundsteuerempfänger werden seit Jahrzehnten in Stromversorgungsnetzen zur Steuerung von Verbrauchern eingesetzt. In der Rundsteuertechnik arbeitet man mit Tonfrequenzsignalen, die in Telegrammform gesendet und dem 50Hz-Stromversorgungsnetz überlagert sind. In den Netzen der Energieversorgungsunternehmen sind unterschiedliche Rundsteuersysteme eingeführt. Die Rundsteuersysteme unterscheiden sich im wesentlichen durch das Impulsraster. Durch das Impulsraster werden bestimmte Systemmerkmale festgelegt, z.B. Impulslängen, Impulspausen und Zykluslänge. Das Programm zur Steuerung eines bestimmten Verbrauchers besteht aus einem Telegramm, d.h. einer codierten Impulsfolge in einem bestimmten Impulsraster. Wenn ein Rundsteuerempfänger auf ein bestimmtes Auswerteprogramm eingestellt ist, bedeutet dies, dass er sowohl auf ein bestimmtes Impulsraster als auch auf eine bestimmte Impulsfolge einschliesslich deren Codierung eingestellt ist.

Während Rundsteuerempfänger der ersten Generation nur für ein bestimmtes Impulsraster geeignet waren und lediglich die Impulsfolge einstellbar war, ist bei neueren Empfängern auch eine Umstellung auf ein anderes Impulsraster, z. B. durch Umlöten von Brücken oder Umstecken von Stiften an einem Kreuzschienen-Verteiler möglich.

Aus der DE-A-28 31 771 ist ein Rundsteuerempfänger mit einem Mikrocomputer und einem Programmspeicher bekannt, in dem die üblichen Impulsraster gespeichert sind. An einem Programmierfeld des Empfängers sind mit Hilfe von Diodensteckern sowohl das gewünschte Impwulsraster als auch eine bestimmte Impulsfolge auswahlbar und festlegbar. Der Empfänger ist damit beim Kunden an das notwendige Auswerteprogramm anpassbar.

Weiterhin ist aus der DE-A1-27 43 212 ein elektrisches Gerät, insbesondere ein Haushaltgerät mit einem darin integrierten Rundsteuerempfänger bekannt. Der Rundsteuerempfänger soll sich nach diesem Vorschlag selbsttätig auf dasjenige Rundsteuersystem einstellen, das an dem Ort im Einsatz ist, an dem das elektrische Gerät betrieben wird. Eine technische Lehre zur Realisierung eines solchen Rundsteuerempfängers ist allerdings nicht angegeben. Es wird nur ausgeführt, daß der Empfänger alle gebräuchlichen Rundsteuerfrequenzen überwache und auf eine Empfangsfrequenz einraste und den ausgesandten Befehl auswerte.

Zur Erhöhung der Zahl möglicher Befehle in einem Rundsteuersystem wird in der DE-B2-21 16 781 ein Rundsteuerempfänger vorgeschlagen, der auf zwei Rundsteuertelegramme anspricht, die kurz nacheinander gesendet werden. Dazu enthält der Empfänger einen ersten Auswerter für die Auswertung des ersten Befehlstelegramms, der ein Zeitglied ansteuert, das wiederum über eine UND-Schaltung für einen festgelegten Zeitabschnitt die Auswertung eines zweiten Befehlstelegramms in einem zweiten Auswerter freigibt.

Schließlich ist aus der DE-A1-27 08 074 ein Rundsteuerempfänger mit einem Mikrocomputer bekannt, dessen Programmspeicher mit Hilfe eines Programmiergerätes geladen werden kann. Dies kann über einen elektrischen Anschluß erfolgen oder über eine optische Datenstrecke, d.h. Lichtsender und Lichtempfänger, die sowohl im Rundsteuerempfänger als auch in einem außerhalb am Empfänger anzusetzenden Programmiergerät vorzusehen sind.

Bei den seit vielen Jahren in Stromversoruns-netzen installierten Rundsteuereinrichtungen treten heute häufig systembedingte Engpässe auf, z.B. wegen nicht mehr ausreichender Befehlszahl oder Adressiermöglichkeit, fehlender Telegramm-Abbruchmöglichkeit und anderer mangelnder Systemfähigkeiten. Energieversorgungsunternehmen mit solchen unzureichenden Systemen haben deshalb das Bedürfnis, auf ein neues, leistungsfähigeres System umzustellen. Eine solche Umstellung wird dadurch erschwert, dass die Umstellung des Rundsteuersystems eines Energieversorgungsunternehmens die Änderung oder Umcodierung von zigtausend Empfängern, bzw. deren Austausch bei ebensovielen Tarifkunden erfordert. Die Umstellung muss innerhalb weniger Stunden erfolgen. Ein allmählicher Übergang von einem alten zu einem neuen System scheidet in der Regel aus, weil dazu z.B. während einer längeren Übergangszeit nacheinander das alte und das neue Telegramm gesendet werden müsste, wobei mit Fehlreaktionen der Empfänger vor allem alter Systeme zu rechnen wäre. Eine gleichzeitige Änderung aller Empfänger oder deren Austausch ist aufgrund der hohen Stückzahlen nicht möglich.

Der Wunsch nach einer Möglichkeit für eine Änderung von Funktionen eines Rundsteuerempfängers ergibt sich jedoch nicht nur bei notwendiger Systemumstellung. Es kann z.B. sein, dass bei einer Änderung in der Aufteilung des Versorgungsgebiets eine grosse Anzahl von Rundsteuerempfängern einer anderen Rundsteuerzentrale zugeordnet werden soll oder eine bestehende Adressenorganisation geändert werden soll, weil die mit einem Befehl geschaltete Leistung zu gross ist. Weiterhin kann die Notwendigkeit bestehen, zu einem späteren Zeitpunkt bestimmte Sonderfunktionen des Rundsteuerempfängers zu aktivieren, z. B. wenn statt einer sofortigen Lastabschaltung eine Vorwarnzeit eingefügt werden soll.

Der Erfindung liegt die Aufgabe zugrunde, einen Rundsteuerempfänger anzugeben, der eine sofortige Systemumstellung zu einem beliebigen Zeitpunkt bzw. eine schnelle Änderung von Funktionen in meh-

reren Rundsteuerempfängern ermöglicht. Die benötigten Funktionen werden dabei entweder vor oder während der Inbetriebnahme der Empfänger eingegeben oder erst während des Betriebs vor einer geplanten Umstellung bzw. Änderung.

Diese Aufgabe wird durch einen Rundsteuerempfänger mit den Merkmalen des Anspruchs 1 gelöst.

Im Programmspeicher eines solchen Empfängers sind mindestens zwei Auswerteprogramme, die sich im Impulsraster und/oder in der Impulsfolge bzw. deren Codierung unterscheiden können, gespeichert. Nur ein Auswerteprogramm ist jeweils wirksam. Die ferngesteuerte Festlegung auf ein bestimmtes Auswerteprogramm erfolgt durch eine Anweisung (Umschaltbefehl), die im Code des bisherigen Auswertepsogramms oder in einem speziellen Code, z.B. einem m-aus-n-Code, gesendet wird. Die empfangene und ausgewertete Anweisung wird als Digitalwert in einem schreibund lesbaren Speicherelement gespeichert und bleibt auch bei Unterbrechung der Stromversorgung gespeichert. Anstelle vollständiger Auswerteprogramme können auch nur Teilfunktionen ferngesteuert geändert oder aktiviert werden.

Vorteile des Empfängers bestehen unter anderem darin, dass

– damit der Übergang auf ein neues System mit wirtschaftlich vertretbarem Aufwand ermöglicht wird und die dafür erforderlichen Investitionen zeitlich gestreckt werden können, da der neue Empfänger im Rahmen des normalen Netzausbaues und des Ersatzes älterer Empfänger installiert werden und im bisherigen System arbeiten kann,

– zu einem beliebigen Zeitpunkt eine Fernumschaltung auf ein neues Auswerteprogramm mit z. B. wesentlich grösserer Befehlskapazität möglich ist und

– durch einen entsprechenden Befehl die Programmänderung auch wieder rückgängig gemacht oder auf ein weiteres Auswerteprogramm umgeschaltet werden kann.

Nach einer vorteilhaften Ausgestaltung ist es möglich, durch sogenanntes Down-Line-Loading von der Rundsteuerzentrale aus Auswerteprogramme in den Programmspeicher des Empfängers zu laden. Damit entfällt eine Programmierung oder Programmänderung vor Ort.

Es ist auch möglich, mit Hilfe einer Fernumschaltung Betriebsarten umzuschalten, z. B. von Empfängerbetrieb in Schaltuhrbetrieb oder umgekehrt, oder Betriebsparameter, z. B. die Anzahl der auszuwertenden Gesamtimpulzahl, zu ändern.

Nach einer weiteren Ausgestaltung kann für Programmänderungen oder Umschaltungen ein besonderer Code verwendet werden, der in Rundsteuersystemen in gleicher Form nicht benutzt wird und den ein Code-Auswerter in der Umschalteinrichtung auswertet. Dabei kann es sich um einen redundanten Code handeln, der eine gesicherte Übertragung und gegebenenfalls eine Fehlerkorrektur am empfangenen Telegramm ermöglicht. Es ist ausserdem möglich zu vereinbaren, dass Umschaltanweisungen mit Hilfe von zwei Telegrammen übertragen werden, so dass erst nach einwandfreiem Empfang von zwei richtig empfangenen Telegrammen innerhalb einer festgelegten Zeitspanne eine Umschaltung durchgeführt wird. Dabei kann es sich entweder um zwei identische Telegramme handeln oder um unterschiedliche Telegramme, die beide zur Auswertung eines darin enthaltenen Codewortes vorliegen müssen.

Der vorgeschlagene Empfänger kann z.B. realisiert werden, indem mindestens zwei Auswerter mit unterschiedlichen Auswerteprogrammen vorgesehen werden, von denen jeweils nur einer aktiviert wird. Die Umschalteinrichtung wird bei dieser Lösung sehr einfach. Eine wirtschaftlich günstige Alternative bietet ein Rundsteuerempfänger, der entsprechend dem heutigen Stand der Technik mit einem Mikrocomputer ausgestattet ist und der ein parametergesteuertes Softwareprogramm enthält (das im Mikrocomputer ablaufende Programm wird mit Softwareprogramm bezeichnet zur Unterscheidung vom zuvor beschriebenen Rundsteuerprogramm). Dieses Softwareprogramm wertet die fernübertragenen Umschaltanweisungen aus und veranlasst interne Umschaltungen, die das Impuls- Raster, die Impulsfolge oder Sonderfunktionen betreffen. Dabei werden durch die Umschaltung dem Softwareprogramm andere Parameter zugewiesen, so dass der Programmablauf (Verzweigungen, Sprünge, Schleifen, Datenabfragen) geändert wird und damit die Funktion des Empfängers variert wird.

Zwei Ausführungsbeispiele sind in der Zeichnung dargestellt und werden nachstehend beschrieben.

Es zeigt

Fig. 1 Rundsteuerempfänger mit zwei fernumschaltbaren Auswertern,

Fig. 2 Rundsteuerempfänger mit einem Mikrocomputer, der einen Sonderbaustein enthält.

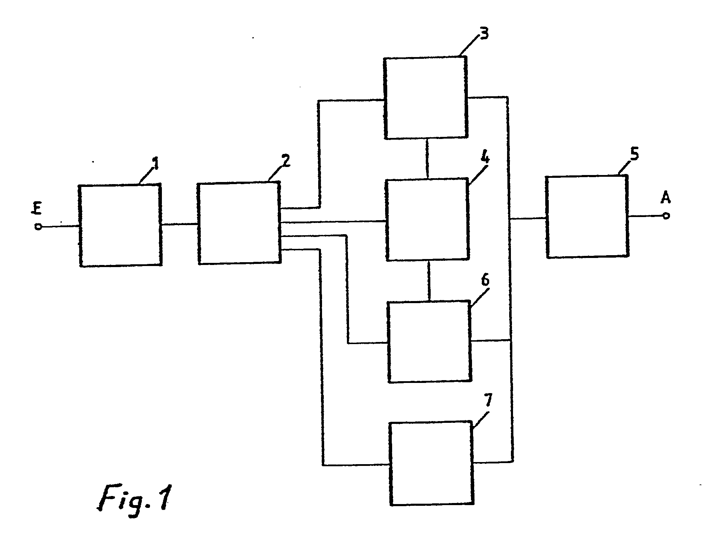

In Fig. 1 ist das Blockschema eines fernumschaltbaren Rundsteuerempfängers dargestellt, mit einem Eingangsteil 1, einer Umschalteinrichtung 2, zwei Auswertern 3, 6, einem Programmspeicher 4, einer Schaltuhr 7 und einem Ausgangsteil 5. Bei einer hardware-mässigen Realisierung können mehrere dieser Funktionsblöcke in einer mikrocomputergesteuerten Baueinheit zusammengefasst sein.

Der Eingangsteil 1 enthält die in Rundsteuerempfängern üblichen Einrichtungen zur Filterung, Begrenzung und Formung der Impulse, die über den Eingang E in den Empfänger gelangen.

Die Auswerter 3 und 6 sind für je ein Auswerteprogramm (Impulsraster, Impulsfolge und Codierung) programmiert. Durch die Umschalteinrichtung 2 ist nur einer der beiden Auswerter 3, 6 oder die Schaltuhr 7 aktiviert. Der aktivierte Auswerter 3 oder 6 nimmt eine Prüfung des empfangenen Rundsteuertelegramms vor, führt den Vergleich mit dem gespeicherten Auswerteprogramm durch und steuert den Ausgangsteil 5 an, der in den üblichen Ausgangsstufen eine Signalverstärkung durchführt und die Rundsteuerbefehle am Ausgang A ausgibt.

Der Programmspeicher 4 enthält mehrere Auswerteprogramme. Die Programme können entweder über ein Programmiergerät direkt geladen werden oder durch sogenanntes Down-Line-Loading von der Rundsteuerzentrale aus ferngeladen werden. Bei Fernladung leitet die Umschalteinrichtung 2 empfangene Auswerteprogramme zum Programmspeicher 4, wo sie abgelegt werden. Durch eine Telegrammanweisung der Zentrale kann die Übernahme eines im Programmspeicher 4 gespeicherten Auswerteprogramms unter Mitwirkung der Umschalteinrichtung 2 in einen Auswerter 3, 6 veranlasst werden.

Die Schaltuhr 7 erlaubt den Einsatz des Empfängers in Netzen, die noch Schaltuhrbetrieb haben und zu einem späteren Zeitpunkt auf Empfängerbetrieb umgestellt werden sollen. Die Umschaltung geschieht analog zur beschriebenen Programmumschaltung dadurch, dass aufgrund eines Umschaltbefehls der Zentrale die Umschalteinrichtung 2 die Schaltuhr 7 ausschaltet und einen der Auswerter 3, 6 aktiviert.

Die Umschalteinrichtung 2 enthält einen Auswerter für Umschaltbefehle. Mit Umschaltbefehlen veranlasst die Zentrale die Umschaltung von einem der Auswerter 3, 6 für Rundsteuerbefehle auf einen anderen Auswerter 6, 3 oder auf die Schaltuhr 7 oder sie leitet damit die Fernladung von Programmen in den Programmspeicher 4 ein. Da Rundsteuersysteme keine Rückmeldeeinrichtung besitzen, werden Umschaltbefehle und Programme zweckmässig mit einem geeigneten redundanten Code übertragen. Im Auswerter der Umschalteinrichtung 2 wird eine Programmprüfung und gegebenenfalls Fehlerkorrektur vorgenommen. Dabei können Befehle mehrfach übertragen und erst nach Empfang mehrerer Telegramme bzw. nach einer Fehlerkorrektur ausgeführt werden.

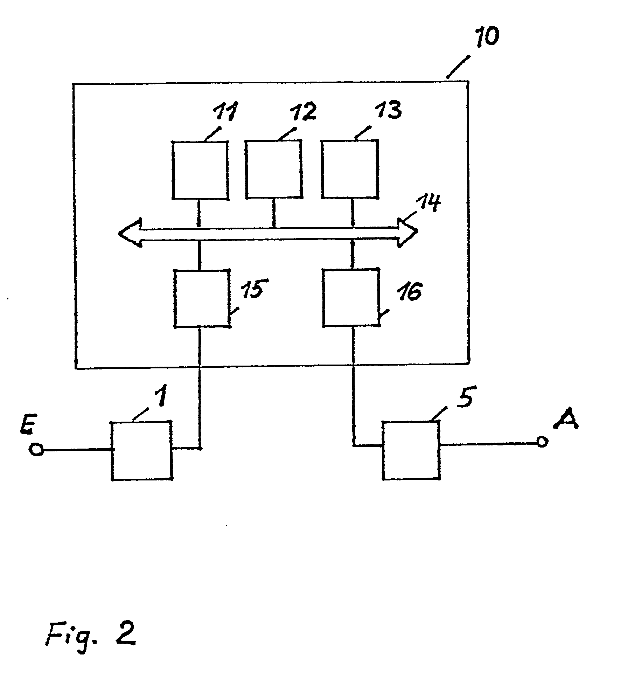

Fig. 2 zeigt ein zweites Ausführungsbeispiel für einen erfindungsgemässen Rundsteuerempfänger. Dabei erfolgt im Gegensatz zum ersten Beispiel eine Funktionsumschaltung, indem im Softwareprogramm eines Mikrocomputers Parameter geändert werden, die dem Programm durch gesetzte nichflüchtige Schreib- une Lesespeicher zugewiesen werden.

Der in Fig. 2 dargestellte Rundsteuerempfänger besteht aus einem Eingangsteil 1, einem Mikrocomputer 10 und einem Ausgangsteil 5. Eingangsteil 1 und Ausgangsteil 5 sind wie beim ersten Beispiel ausgeführt. Der Mikrocomputer 10 enthält einen Mikroprozessor 11, einen programmierbaren Festspeicherbaustein (PROM) 12, einen Sonderbaustein 13, einen Eingabebaustein 15 und einen Ausgabebaustein 16, die alle an einen BUS 14 angeschlossen sind. Der Eingangsteil 1 ist mit dem Eingabebaustein 15 und der Ausgangsteil 5 mit dem Ausgabebaustein 16 verbunden. Der Sonderbaustein 13 ist zweckmässig ein nichtflüchtiger Schreib- und Lesespeicher (NON VOLATILE RAM).

Das Softwareprogramm des Empfängers wird in einem maskenprogrammierten ROM, das im Mikroprocessor 11 enthalten sein kann, und/oder im PROM 12 gespeichert. Ausserdem werden im PROM 12 invariante und variable Parameter (Rundsteuerkenndaten) gespeichert.

Invariante Parameter sind solche, die einheitlich für alle Empfänger eines Anwenders (Elektrizitätsversogungsunternehmen) sind. Dazu zählen z. B. die ein Rundsteuersystem bestimmenden Impulsraster, Prüfmarken für Lage und Länge zulässiger Impulse und Maximal zulässige Anzahl von Impulsen je Telegramm. Diese invarianten Parameter werden im Rahmen der Fertigung bzw. Endprüfung im PROM 12 festgelegt. Dabei werden die invarianten Parameter für mindestens zwei Rund-steuersysteme gespeichert.

Variable Parameter kann der Anwender (Kunde) selbst festlegen und programmieren. Sie werden auch im PROM 12 gespeichert. Dabei handelt es sich um Parameter, die nicht in der Fertigung einheitlich festgelegt werden sollen, sondern von Empfänger zu Empfänger unterschiedlich festlegbar sein sollen. Dazu zählen z.B. Impulsfolgenfestlegungen je Ausgangsrelais oder Schaltreaktions-zeiten (z.B. Einschaltverzögerungen) der Ausgangsrelais.

Zusätzlich können im PROM 12 mehrere Parameter für Sonderfunktionen des Rundsteuerempfänges gespeichert sein, die gegebenenfalls zu einem späteren Zeitpunkt aktiviert werden sollen.

Die Aktivierung der gespeicherten invarianten und varaiblen Parameter und damit die Festlegung des Softwareprogrammablaufs, der die Gesamtfunktion des Rundsteuerempfängers bestimmt, ist abhängig von der Parameterzuweisung, die durch den Sonderbaustein 13 erfolgt.

Die Anzahl der fernsteuerbaren Schaltfunktionen sowie die Anzahl umschaltbaren Impulsfolgen und Impulsraster bestimmt die erforderliche Speicherkapazität des Sonderbausteins 13. Die Funktionnen selbst sind als Programm und/oder Programmparameter in anderen Speichern des Mikrocomputers 10 enthalten. Der Sonderbaustein 13 benötigt somit nur eine sehr geringe Speicherkapazität.

Das Softwareprogramm fragt während des Programmablaufs die vorgenannten invarianten und variablen Parameter ab. Die Freigabe une Änderung der Parameter wird vom Sonderbaustein 13 gesteuert. Somit kann das Softwareprogramm unterschiedliche Bearbeitungssequenzen durchlaufen, wodurch der Rundsteuerempfänger unterschiedliche Funktionen hat.

Die ferngesteuerte Umschaltung der Empfängerfunktion erfolgt so, dass ein Softwareprogramm, das z.B. mit den Parameterwerten n läuft, die einen Ablauf 1 charakterisieren (Rundsteuersystem 1 und/oder eine Funktionalität 1) eine Anweisung zur Umschaltung auswertet und daraufhin Speicher im Sonderbausteim 13 entsprechend setzt. Damit ist eine Umschaltung auf Parameterwerte m erfolgt, die einen Ablauf 2 charakterisieren ; die Parameterwerte n werden gesperrt. Der nächste Programmablauf erfolgt mit den Parameterwerten m.

Während der Inbetriebnahme des Systems wird eine bestimmte Parameterzuweisung und damit eine bestimmte Empfängerfunktion eingestellt. Während des Betriebs kann die Zuweisung über Rundsteuerbefehle geändert werden. Dabei kann zur Sicherung eine andere Codierung als bei den sonstigen Rundsteuertelegrammen verwendet werden, z.B. ein m-aus-n-Code mit Quersummenprüfung. Durch Makrobefehle können mehrere Parameter mit einem Rundsteuerbefehl geändert werden (z.B. Systemumschaltung und Sonderfunktionen) oder es können durch Einzelbefehle einzelne Parameter geändert bzw. Sonderfunktionen aktiviert werden.

## Ansprüche

1. Rundsteuerempfänger mit einem Programmspeicher (4 ; 12), in welchem ein oder mehrere Impulsraster üblicher Rundsteuersysteme gespeichert sind und in welchem ein empfangenes Rundsteuertelegramm aufgrund eines gewählten Impulsrasters und einer im Programmspeicher (4 ; 12) änderbar gespeicherten Impulsfolge ausgewertet wird, dadurch gekennzeichnet, daß

a) zusätzlich mehrere Impulsfolgen im Programmspeicher (4 ; 12) und/oder Sonderfunktionenen im Programmspeicher (12) abgelegt sind und

b) eine Einrichtung (2 ; 13) vorhanden ist, die auf eine codierte Anweisung hin eine ferngesteuerte Umschaltung der Impulsraster und/oder Impulsfolgen bzw. Sonderfunktionen durchführt.

2. Rundsteuerempfänger nach Anspruch 1, dadurch gekennzeichnet, daß der Empfänger mit einem Mikrocomputer (10) ausgeführt ist, der außer dem Programmspeicher (12) einen Sonderbaustein (13) enthält, der

a) während des Programmablaufs abgefragt wird und dem Programm festgelegte Parameterwerte, z.B. n oder m, zuweist, wobei durch die Parametewerte, z.B. n oder m, jeweils eine bestimmte Empfängerfunktion festgelegt ist, und ein bestimmtes Impulsraster sowie eine Impulsfolge ausgewählt sind und

b) eine Umschaltungeinrichtung (2) enthält, die auf eine codierte Anweisung der Zentrale hin bestimmte Parameterwerte, z.B. n, sperrt und andere Parameterwerte, z.B. m, freigibt, wodurch die Empfängerumstellung erreicht ist.

3. Rundsteuerempfänger nach Anspruch 1 oder 2, dadurch gekennzeichnet, daß Einrichtungen vorgesehen sind, die eine Fernladung des Programmspeichers (4, 12) ermöglichen.

4. Rundsteuerempfänger nach einem der Ansprüche 1 bis 3, dadurch gekennzeichnet, daß zur Umschaltung ein Code-Auswerter vorgesehen ist, der auf eine codierte Anweisung anspricht, die in gleicher Form in Rundsteuersystemen nicht verwendet ist.

5. Rundsteuerempfänger nach Anspruch 4, dadurch gekennzeichnet, daß der Code-Auswerter zur Auswertung von Umschaltbefehlen besondere Auswertekriterien zugrundelegt, wobei zwei oder mehr Codewörter in Form von Rundsteuertelegrammen innerhalb einer festgelegten Zeitspanne fehlerfrei empfangen worden sein müssen.

6. Rundsteuerempfänger nach einem der Ansprüche 1, 3, 4 und 5, dadurch gekennzeichnet, daß die Umschalteinrichtung (2) den Zugriff auf Datenspeicher ändert, indem sie von einem Auswerter (3, 6) auf einen anderen Auswerter (6, 3) umschaltet.

## Claims

1. Ripple control receiver containing a program memory (4 ; 12) in which one or more pulse patterns of conventional ripple control systems are stored and in which a received ripple control message is evaluated on the basis of a selected pulse pattern and a pulse sequence variably stored in the program memory (4 ; 12), characterized in that

a) additionally several pulse sequences are stored in the program memory (4 ; 12) and/or special functions are stored in the program memory (12) and

b) a device (2 ; 13) exists which, following a coded instruction, carries out a remote-controlled switching between the pulse patterns and/or pulse sequences or special functions.

2. Ripple control receiver according to Claim 1, characterized in that the receiver is designed to include a microcomputer (10) which, apart from the program memory (12), contains a special chip (13) which

a) is interrogated during the program run and allocates to the program predetermined parameter values, for example n or m, a particular receiver function in each case being determined by the parameter values, for example n or m, and a particular pulse pattern and a pulse sequence are selected and

b) contains a switching device (2) which, following a coded instruction from the central station, blocks particular parameter values, for example n, and releases other parameter values, for example m, by which means the receiver resetting is achieved.

3. Ripple control receiver according to Claim 1 or 2, characterized in that devices are provided which enable the program memory (4, 12) to be remotely loaded.

4. Ripple control receiver according to one of Claims 1 to 3, characterized in that for the purpose of switching, a code analyser is provided which responds to a coded instruction which is not used in the same form in ripple control systems.

5. Ripple control receiver according to Claim 4, characterized in that the code analyser uses special analysing criteria for analysing switching commands, in which arrangement two or more code words in the form of ripple control messages must have been received without errors within a fixed period of time.

6. Ripple control receiver according to one of Claims 1, 3, 4 and 5, characterized in that the switching device (2) changes the access to data memories by switching from one analyser (3, 6) to another analyser (6, 3).

## Revendications

1. Récepteur de télécommande centralisée comprenant une mémoire de programme (4 ; 12) dans laquelle sont mémorisées une ou plusieurs trames d'impulsion de systèmes habituels de télécommande centralisée et dans laquelle un télégramme de télécommande centralisée reçu est exploité sur la base d'une trame d'impulsion choisie et d'une suite d'impulsion mémorisée de façon modifiable dans la mémoire de programme (4 ; 12), caractérisé par le fait que

a) plusieurs suites d'impulsions supplémentaires sont enregistrées dans la mémoire de programme (4 ; 12) et/ou des fonctions spéciales sont enregistrées dans la mémoire de programme (12) et

b) un dispositif (2 ; 13) est prévu qui, à la suite d'une instruction codée, exécute une commutation télécommandée des trames d'impulsions et/ou suites d'impulsions ou des fonctions spéciales.

2. Récepteur selon la revendication 1, caractérisé par le fait que le récepteur est réalisé avec un micro-ordinateur (10) contenant, en dehors de la mémoire de programme (12), un bloc fonctionnel spécial (13) qui

a) est interrogé au cours du déroulement de programme et attribue au programme des valeurs de paramètre définies, par exemple n ou m, les valeurs de paramètre, par exemple n ou m, définissant chaque fois une fonction déterminée du récepteur, et sélectionnant une trame d'impulsions déterminée ainsi qu'une suite d'impulsions et

b) contient un dispositif de commutation (2) qui, suite à une instruction codée de la centrale, bloque des valeurs de paramètre déterminées, par exemple n, et libère d'autres valeurs de paramètre, par exemple m, ce qui provoque la commutation du récepteur.

3. Récepteur selon la revendication 1 ou 2, caractérisé par le fait que des dispositifs sont prévus qui permettent un téléchargement de la mémoire de programme (4 ; 12).

4. Récepteur selon l'une des revendications 1 à 3, caractérisé par le fait que pour la commutation il est prévu un système d'exploitation de code répondant à une instruction codée qui n'est pas utilisée sous la même forme dans des systèmes de télécommande centralisée.

5. Récepteur selon la revendication 4, caractérisé par le fait que pour l'exploitation d'ordres de commutation, le système d'exploitation de code se base sur des critères d'exploitation particuliers, deux ou plusieurs mots codes devant être reçus de façon exempte d'erreurs sous la forme de télégramme de télécommande centralisée, en un intervalle de temps défini.

6. Récepteur selon l'une des revendications 1, 3, 4, et 5, caractérisé par le fait que le dispositif de commutation (2) modifie, l'accès à la mémoire de données en commutant d'un système d'exploitation (3, 6) à un autre système d'exploitation (6, 3).

Fig. 1

Fig. 2